# EUROPEAN PATENT APPLICATION

(11) **EP 1 821 499 A1**
(43) Date of publication of application: **22.08.2007**
(21) Application number: 07250587.8
(22) Date of filing: 13.02.2007
(51) Int. Cl.: H04L 29/08

(54) **Communication apparatus and communication control method of the apparatus**

(30) Priority: 15.02.2006 JP 2006038483
(71) Applicant: CANON KABUSHIKI KAISHA, Ohta-ku, Tokyo (JP)
(72) Inventor: Terao, Yoshihide, Ohta-ku Tokyo (JP)
(74) Representative: Legg, Cyrus James Grahame

(57) **Abstract**

A communication apparatus acquires sender information (S3, S13) indicating a sender of a received document, converts that document (S4, S14) into a document of a specific format, adds the sender information to the document (S5, S15) of the specific format, and transfers that document of the specific format to a transfer destination (S6, S18).

## Description

### BACKGROUND OF THE INVENTION

### Field of the Invention

The present invention relates to a communication apparatus that transfers a document sent via facsimile, electronic mail, or the like to another device, and to a communication control method of that communication apparatus. Herein, a document refers generally to data including document data and/or image data and the like.

### Description of the Related Art

Ordinarily, a facsimile document or mail document sent from a facsimile device or electronic mail device connected to a telephone line, the Internet, or the like is received with a communication device, and the received document is transferred to a transfer destination device according to transfer settings set in that communication device (JP H11-134266A).

In the conventional technology however, information specifying the original sender (or the sending device) of the document before transfer is not added to the document sent to that transfer destination. Thus, in the transfer destination device that has received that transferred document, it is not possible to determine who (where) that transferred document was originally received from.

Also, for example, when an electronic mail address ("A") of the transfer destination device is set, if the user of that transfer destination device checks the "From address" in the header of the transferred electronic mail, it is possible to identify which device (user) the document was transferred from. However, when that document alone is converted to another format and transferred to another folder or the like, information that specifies which device or which user the document was transferred from is not included in the transferred document itself. Thus, when such a document is read or received, it is not possible to identify who (where) that transferred document was originally received from.

### SUMMARY OF THE INVENTION

It is an object of the present invention to address the problems in the conventional technology described above.

The present invention provides technology with which it is possible to identify the original sender of a received document even in a case that document was transferred after conversion into a document of a specific format.

According to a first aspect of the present invention there is provided a communication apparatus according to claim 1.

According to a second aspect of the present invention there is provided a method for controlling communication according to claim 8.

According to a third aspect of the present invention there is provided a program according to claim 14.

The present invention may also comprise optional features as set out in the dependent claims.

### BRIEF DESCRIPTION OF THE DRAWINGS

The accompanying drawings, which are incorporated in and constitute a part of the specification, illustrate embodiments of the invention and, together with the description, serve to explain the principles of the invention.

FIG. 1 illustrates the configuration of an entire system according to an embodiment of the present invention;

FIG. 2 is a block diagram that illustrates the configuration of a mail server, a file sharing server, and client PCs according to this embodiment;

FIG. 3 is a block diagram that illustrates the configuration of a monochrome multi-functional peripheral and a color multi-functional peripheral according to this embodiment;

FIG. 4 depicts an exterior view of a console unit of a multi-functional peripheral according to this embodiment;

FIG. 5 illustrates a modified example of received data in the first embodiment;

FIG. 6 shows an example in which, in the first embodiment, a client PC checks property information of a received document and displays that property information on a display;

FIG. 7 is a flowchart that illustrates processing in a multi-functional peripheral according to the first embodiment;

FIG. 8 depicts a view explaining a mail transfer according to a second embodiment of the present invention;

FIG. 9 depicts a view explaining conversion of received data in the second embodiment;

FIG. 10 depicts a display example of property information in the client PC according to the second embodiment;

FIG. 11 depicts a view of an example of a detail display according to the second embodiment; and

FIG. 12 is a flowchart that illustrates processing in a multi-functional peripheral according to the second embodiment.

### DESCRIPTION OF THE EMBODIMENTS

Embodiments of the present invention will now be described in detail with reference to the accompanying drawings. It should be noted that the embodiments below do not limit the present invention set forth in the claims and that not all of the combinations of features described in the embodiments are necessarily essential as means for attaining the objects of the invention.

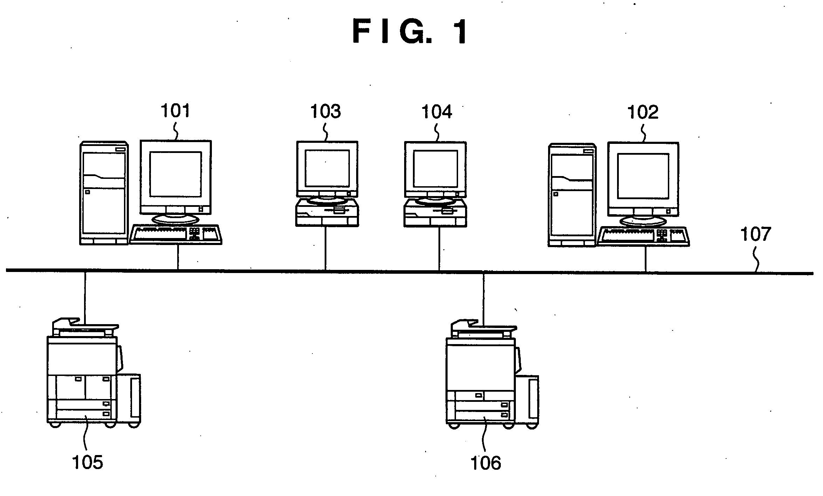

FIG. 1 illustrates the configuration of an entire system according to an embodiment of the present invention.

A mail server 101 sends electronic mail sent from a client PC 103, 104, or the like to the address of that mail. A file sharing server 102 can share a folder on the file sharing server 102 with another device via a network 107. The client PCs 103 and 104 can send electronic data to a folder of the file sharing server 102 via the network 107. A monochrome multi-functional peripheral 105 and a color multi-functional peripheral 106 have, in addition to a function to copy an original, a facsimile function, a scanner function, and the like to capture an original, convert the original to electronic data, and send the original. Further, these multi-functional peripherals 105 and 106 also have a transfer function to receive electronic mail sent from the client PC 103, the client PC 104, or the like, and transfer that electronic mail to a designated transfer destination.

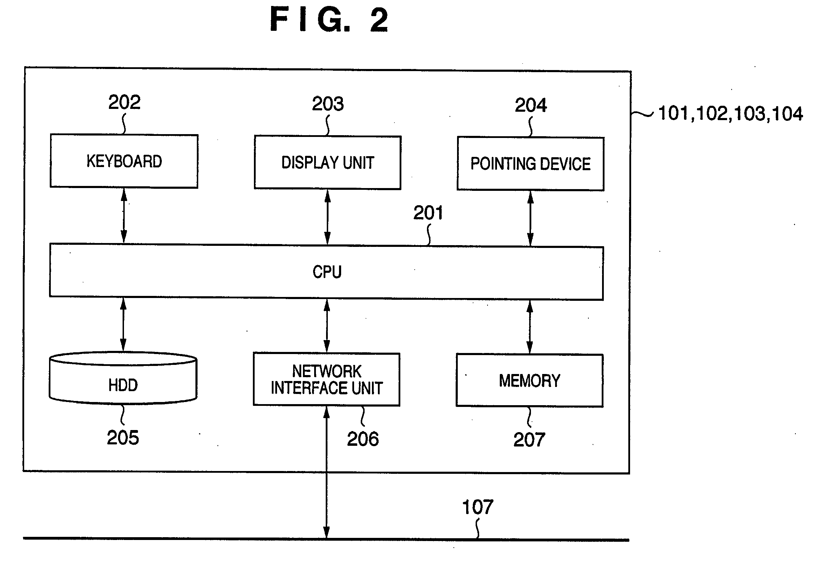

FIG. 2 is a block diagram that illustrates the hardware configuration of the mail server 101, the file sharing server 102, and the client PCs according to the present embodiment. This configuration is the same for an ordinary personal computer, workstation, or the like.

A CPU 201 executes various controls in the present embodiment in accordance with a program stored in a memory 207. A keyboard 202 is operated by a user, and is used to input various commands, data, or the like. A display unit 203 includes for example a display panel of liquid crystal or the like, and displays to the user messages and various data, as well as data that has been input by the user. A pointing device 204 includes for example a mouse (registered trademark) or the like, the mouse being used for selection of an icon, menu, or the like displayed by the display unit 203, and also used for a rendering process, starting an application, or the like. An HDD (hard disk drive) 205 is a high-capacity storage unit, and stores various data such as an operating system and various applications, image data of photographs or the like, mail documents, addresses, or the like. A network interface unit 206 controls communication with the network 107 such as the Internet. When execution of a program installed on the HDD 205 is instructed, the program is loaded into the memory 207, and executed under the control of the CPU 201. The memory 207 is also provided with a work area in which various data is temporarily saved when control processing is performed by the CPU 201.

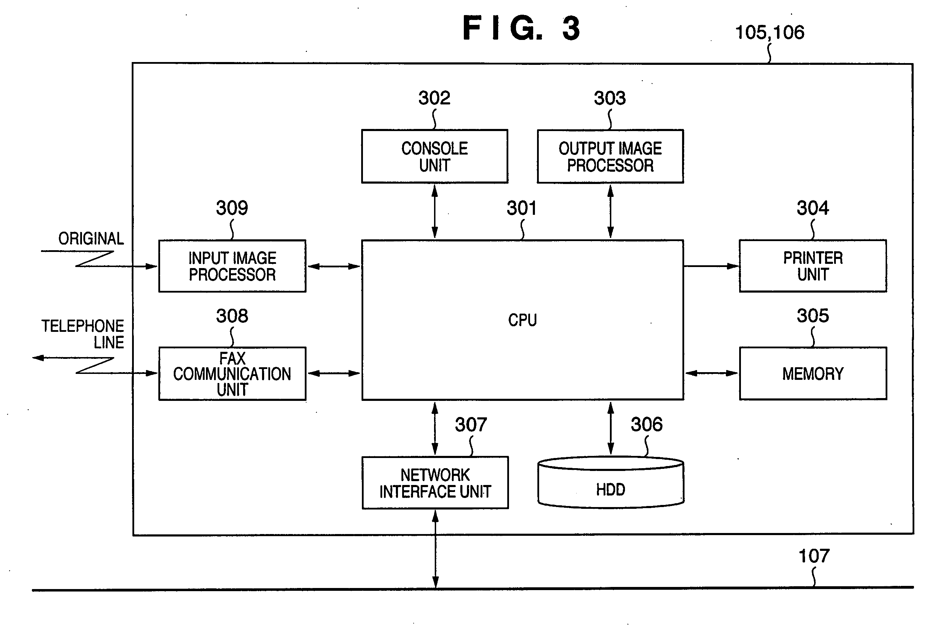

FIG. 3 is a block diagram that illustrates the configuration of the monochrome multi-functional peripheral 105 and the color multi-functional peripheral 106. Here, the monochrome multi-functional peripheral 105 and the color multi-functional peripheral 106 differ only in whether the image data of the processing target is monochrome or color. Because the basic configuration of those peripherals is the same, FIG. 3 illustrates both the monochrome multi-functional peripheral 105 and the color multi-functional peripheral 106.

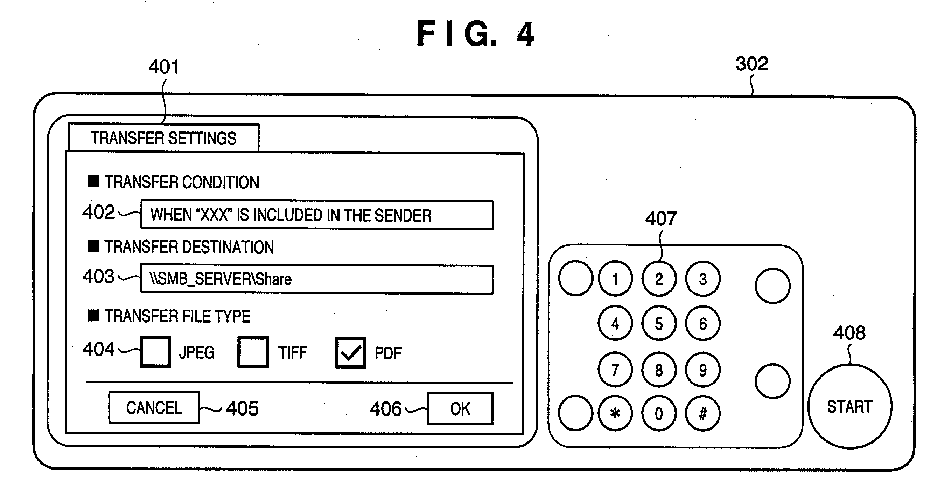

A CPU 301 controls the overall operation of this multi-functional peripheral according to the program stored in a memory 305. A console unit 302 (see FIG. 4) has various keys and a display unit, is operated by the user, and is used to input instructions such as to make a copy or send a facsimile. An output image processor 303 performs processing of image data that is to be output to a printer unit 304. The printer unit 304 is a monochrome printer in the case of the monochrome multi-functional peripheral 105 and a color printer in the case of the color multi-functional peripheral 106. The memory 305 temporarily stores a program and various data. An HDD (hard disk drive) 306 stores captured image data, sent or received document data, and the like. A network interface (I/F) unit 307 controls communication with the network 107 such as the Internet. A FAX communication unit 308 sends or receives a facsimile signal via a telephone line. An input image processor 309 performs processing to capture an original by scanning that original, thus inputting the original as image data.

FIG. 4 depicts an exterior view of the console unit 302 of the multi-functional peripheral according to an embodiment of the present invention.

Reference numeral 401 denotes a display indicating that this screen is for setting transfer data such as the transfer destination of a received mail and a transfer condition. Numeral 402 denotes an area for the setting of the transfer condition, and here, the transfer condition is set such that when "XXX" is included in the sender of the received mail, that mail is transferred to a predetermined transfer destination. Numeral 403 denotes an area for the setting of the transfer destination, and here an address "\\SMB_SERVER\Share" for the transfer destination file sharing server 102 is set. Numeral 404 denotes an area indicating the file type of the transferred file, and here it is possible to select any of the file types JPEG, TIFF, and PDF. In FIG. 4, a radio button for the PDF file type is checked, so the PDF file type is selected. Numeral 405 denotes a cancel button that cancels all of these settings, and numeral 406 denotes an "OK" button for validating these settings. When the button 406 is instructed, the various settings data set in this screen is stored on the HDD 306. Also, reference numeral 407 denotes a numeric keypad for inputting a telephone number or setting the number of copies or the like, and numeral 408 denotes a start key that instructs to start sending or the like.

### <First Embodiment>

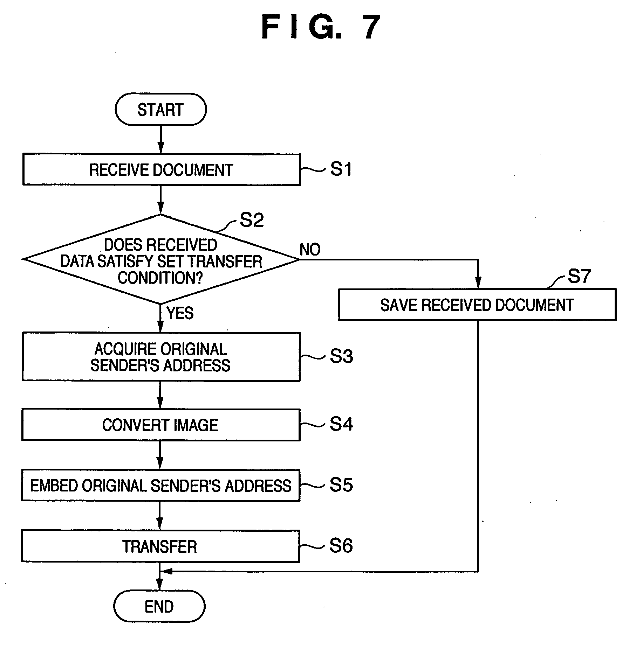

Next is a description of processing in a multi-functional peripheral according to the first embodiment, with reference to the flowchart in FIG. 7.

FIG. 7 is a flowchart that illustrates the processing in the multi-functional peripheral 106 (105) according to the first embodiment. A program that executes this processing is stored in the memory 305, and is executed under the control of the CPU 301. Here, the case of the color multi-functional peripheral 106 is illustrated, but the processing in the case of the monochrome multi-functional peripheral 105 is basically the same.

Prior to this processing, for example, a user A, who is the user of the client PC 103, creates an electronic mail using the client PC 103 by inputting a mail address, a subject, a message body, and an attached file. That mail address is the electronic mail address of the color multi-functional peripheral 106. Then, the client PC 103 sends this electronic mail to the network 107 via the network interface unit 206. When sending this electronic mail, for example, mail data is converted (encoded) according to MIME standards prescribed by RFCs 2045 to 2049, and this converted (encoded) data is transmitted as send data via the network 107.

Thus the color multi-functional peripheral 106, in Step S1, via the network interface unit 307, receives the data sent from the client PC 103 and converted (encoded) according to MIME standards. The received data includes a mail header in addition to the data obtained by converting (encoding) the mail message body and an attached file according to MIME standards. In this mail header, the mail address of the sender (here user A) and a destination mail address (the electronic mail address of the multi-functional peripheral 106) are stated. Next, in Step S2, the color multi-functional peripheral 106 decodes and analyzes the content of the received data to determine whether or not that received data satisfies the transfer condition set in the color multi-functional peripheral 106.

This transfer condition is set by the user operating the console unit 302 shown in FIG. 4 described above.

In the example of FIG. 4, for example, the transfer condition is set to "when "XXX" is included in sender" in 402. "\\SMB_SERVER\Share" is set as the transfer destination in 403. Further, "PDF" is set as the transfer file type in 404. Accordingly, in this case for example, the color multi-functional peripheral 106 judges whether or not the mail address of the sender stated in the mail header includes "XXX".

In Step S2, when the color multi-functional peripheral 106 judges that the transfer condition set in the multi-functional peripheral 106 is satisfied, the process advances to Step S3, and when the color multi-functional peripheral 106 judges that the transfer condition set in the multi-functional peripheral 106 is not satisfied, the process advances to Step S7, the received data is stored on the HDD 306, and the process finishes.

On the other hand, when the color multi-functional peripheral 106 judges that the transfer condition is satisfied, in Step S3, the color multi-functional peripheral 106 acquires a content (here the mail address of original sender A) of the From address included in the message header of the received data. Next, in Step S4, the color multi-functional peripheral 106 converts a portion obtained by removing the header portion from the received data, i.e. the mail message body and the attached file, to data of the transfer file type that is set as transfer data. Here, according to the example shown in FIG. 4, conversion into PDF-format data (PDF-format data is referred to as PDF data) is performed. This conversion is executed by the output image processor 303.

Next, in Step S5, the color multi-functional peripheral 106 embeds the original sender's mail address acquired in Step S3 in the PDF data generated in Step S4. Next, in Step S6, the PDF data in which the original sender's mail address is thus embedded is transferred to the directory (in the above example, "\\SMB_SERVER\Share") of the transfer destination (for example, the file sharing server 102) by the color multi-functional peripheral 106.

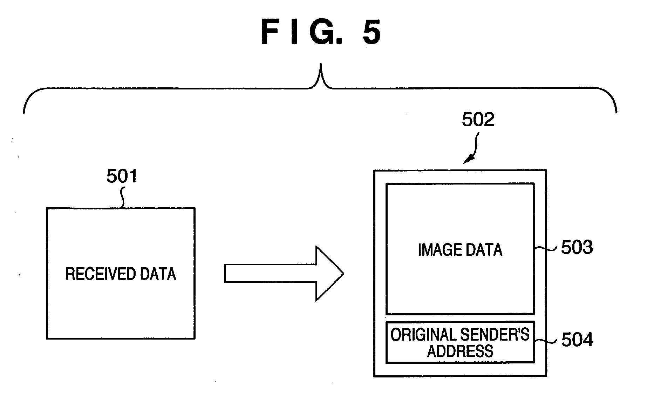

FIG. 5 illustrates an example of conversion of received data in the first embodiment. This corresponds to Steps S4 and S5 in FIG. 7 stated above.

In the above example, received data 501 is converted to PDF format, which is designated as the transfer file type. Reference numeral 502 denotes this PDF-format data. This PDF data includes image data 503 converted to PDF-format data in Step S4, and the original sender's mail address 504 (From Address) embedded in Step S5. Here, the image data 503 is data of a portion obtained by removing the message header portion from the received data 501, i.e. the mail message body and the attached file together.

In Step S6, the PDF data transferred to the directory of the file sharing server 102 is accessible as a file from a computer such as the client PC 104. Here, the client PC can confirm property information of the PDF data stored on the file sharing server 102. This property information includes information such as the size of the file, the date and time the file was created, the sender, and the like.

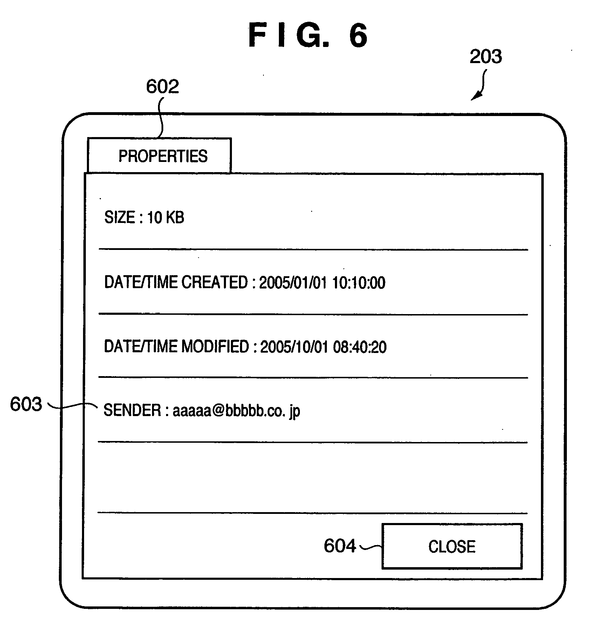

FIG. 6 depicts a view illustrating an example in which the client PC has confirmed that property information and displayed that property information on the console unit 302 of that client PC.

reference numeral 602 denotes that the displayed content is property information. Reference numeral 603 denotes the sender's mail address (the mail address of sender A in the above example) embedded in the PDF file in Step S5 in FIG. 7 is displayed.

Thus, with the client PC, by confirming the properties of the transfer data transferred from the color multi-functional peripheral 106, it is possible to confirm who originally sent that transferred data. Thus, even when that data has been transferred to the file sharing server 102 such that the mail header of the electronic mail cannot be checked, it is possible to confirm the original sender of that mail.

In the first embodiment, the From address is used as sender information, but the sending individual, or a telephone number or the like with which the device that sent the mail can be identified, may also be used.

Also, in the present embodiment, the case of transfer data in the PDF format was described, but the present invention is not limited to this. Any file format may be used in which sender or author information can be embedded.

According to the first embodiment as described above, information that identifies the sender is added to the transferred document, so at the transfer destination that received the transferred document, it is possible to identify the original sender of the transferred document.

### <Second Embodiment>

Next is a description of a second embodiment of the present invention. The system in the second embodiment, and the configuration of the mail server 101, the file sharing server 102, the client PCs 103 and 104, and the multi-functional peripherals 105 and 106, are the same as in the first embodiment described above, and so a description thereof is omitted here.

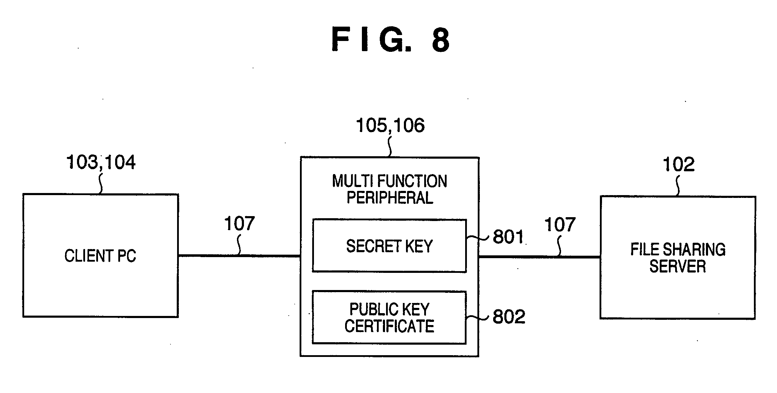

FIG. 8 depicts a view explaining a mail transfer according to the second embodiment.

On the HDD 306 of the multi-functional peripheral 106 (105), a unique secret key 801 and a public key certificate 802 paired with that secret key 801 are saved in advance for each device. Below, the case of the color multi-functional peripheral 106 is described, but the same processing is performed in the case of the monochrome multi-functional peripheral 105, so a description of the processing in the monochrome multi-functional peripheral 105 is omitted here.

The color multi-functional peripheral 106, when transferring received data to a transfer destination, for example, embeds image data and the original sender's address (From Address) of that mail in a file with the transfer file type indicated with the aforementioned console unit 302. Further, after the color multi-functional peripheral 106 embeds the public key certificate 802 saved on the HDD 306 into that file, the color multi-functional peripheral 106 acquires hash data for that data by performing hash processing using an algorithm such as SHA-1 or MD5. Then, the color multi-functional peripheral 106 electronically signs that hash data with the secret key 801 according to the RSA cryptography algorithm prescribed by Public Key Cryptography Standard PKCS #1, generating signature information, and embeds the signature information in that file. The color multi-functional peripheral 106 transfers the file thus generated to the directory of the transfer destination (for example, the file sharing server 102).

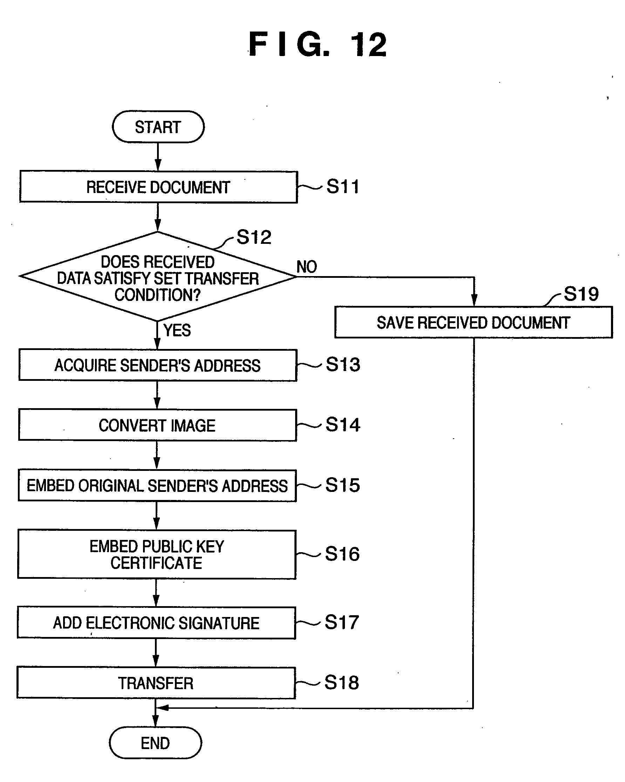

Next is a description of the details of processing in the second embodiment, with reference to the flowchart in FIG. 12.

FIG. 12 is a flowchart that illustrates the processing in the multi-functional peripheral 106 (105) according to the second embodiment. A program that executes this processing is stored in the memory 305, and is executed under the control of the CPU 301. Here, the case of the color multi-functional peripheral 106 is illustrated, but the processing in the case of the monochrome multi-functional peripheral 105 is basically the same. Also, the processing in Steps S11 to S15 in FIG. 12 is the same as the processing in Steps S1 to S5 in FIG. 7 described above, so below that processing is described only briefly.

Prior to this processing, a user A who is the user of the client PC 103 creates an electronic mail using the client PC 103 by inputting a mail address, appropriate subject, message body, and attached file. That mail address is the electronic mail address of the color multi-functional peripheral 106. Then, the client PC 103 sends this electronic mail to the network 107 in accordance with the mail address via the network interface unit 206. When sending this electronic mail, for example, mail data is converted (encoded) according to MIME standards prescribed by RFCs 2045 to 2049, and this converted (encoded) data is transmitted as send data via the network 107.

Thus the color multi-functional peripheral 106, in Step S11, via the network interface unit 307, receives the data sent from the client PC 103 and converted (encoded) according to MIME standards. The data received includes a mail header in addition to the data obtained by converting (encoding) the mail message body and an attached file according to MIME standards. In this mail header, the mail address of the sender and a destination mail address are stated. Next, in Step S12, the color multi-functional peripheral 106 decodes and analyzes the content of the received data to determine whether or not that received data satisfies the transfer condition set in the color multi-functional peripheral 106. Setting of the transfer condition in the color multi-functional peripheral 106 is performed in the same manner as described in the first embodiment, so a description thereof is omitted here.

In Step S12, when it is judged that the transfer condition set in the multi-functional peripheral 106 is satisfied, the process advances to Step S13, and when it is judged that the transfer condition set in the multi-functional peripheral 106 is not satisfied, the process advances to Step S19, the received data is stored on the HDD 306, and the process finishes. In Step S13, the multi-functional peripheral 106 acquires a content (the sender's mail address) of the From address included in the message header of the received data. Next, in Step S14, the color multi-functional peripheral 106 converts a portion obtained by removing the header portion from the received data, i.e. the mail message body and the attached file, to data of the transfer file type that is set as transfer data. Here, according to the example shown in FIG. 4, conversion into PDF-format data is performed. This conversion is executed by the output image processor 303. Next, in Step S15, the color multi-functional peripheral 106 embeds the sender's mail address acquired in Step S13 in the PDF file generated in Step S14.

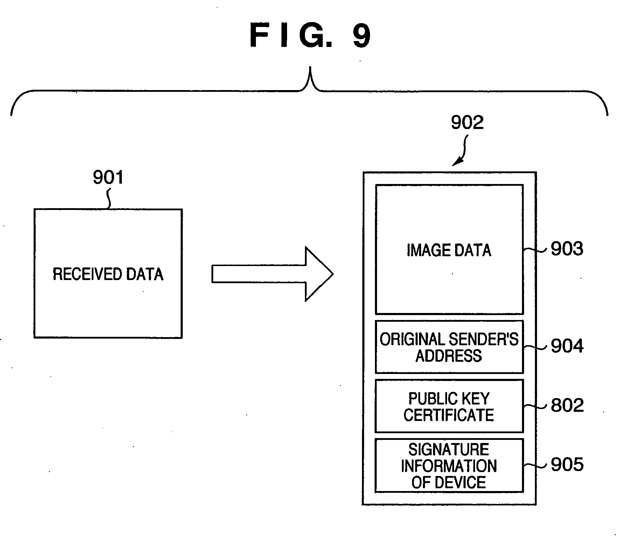

FIG. 9 illustrates the conversion of received data in the second embodiment.

Received data 901 is converted to PDF-format data, which has been designated as the transfer file type. reference numeral 902 denotes this PDF-format data. The PDF-format data includes image data 903, an original sender's mail address (From address) 904, the public key certificate 802, and device signature information 905. Here, the image data 903 is data of a portion obtained by removing the message header portion from the received data 901, i.e. the mail message body and the attached file together. The original sender's mail address 904 is acquired in Step S13 from the From address.

Next is a description of the process to generate this electronic signature, with reference to FIGS. 8, 9, and 12.

On the HDD 306 of the multi-functional peripheral 106, a unique secret key 801 and a public key certificate 802 paired with that secret key 801 are saved in advance for each device. The color multi-functional peripheral 106, when transferring the received data 901 to a transfer destination, embeds the image data 903 and the original sender's mail address 904 in the PDF file 902. Further, in Step S16, the color multi-functional peripheral 106 embeds the public key certificate 802 saved on the HDD 306 into the PDF file 902. Then, the color multi-functional peripheral 106 acquires hash data for that data by performing hash processing using an algorithm such as SHA-1 or MD5. Further, the color multi-functional peripheral 106 electronically signs that hash data with the secret key 801 according to the RSA cryptography algorithm prescribed by Public Key Cryptography Standard PKCS #1, generating the signature information 905. In Step S17, the color multi-functional peripheral 106 embeds the signature information 905 in the PDF file 902.

In Step S18, the color multi-functional peripheral 106 transfers the PDF file 902, in which the image data 903, the original sender's mail address 904, the public key certificate 802 of the color multi-functional peripheral 106, and the signature information 905 have been embedded, to the directory of the transfer destination (for example, the file sharing server 102).

Next, the client PC 104 can confirm the property information of the PDF file transferred to the directory of the file sharing server 102.

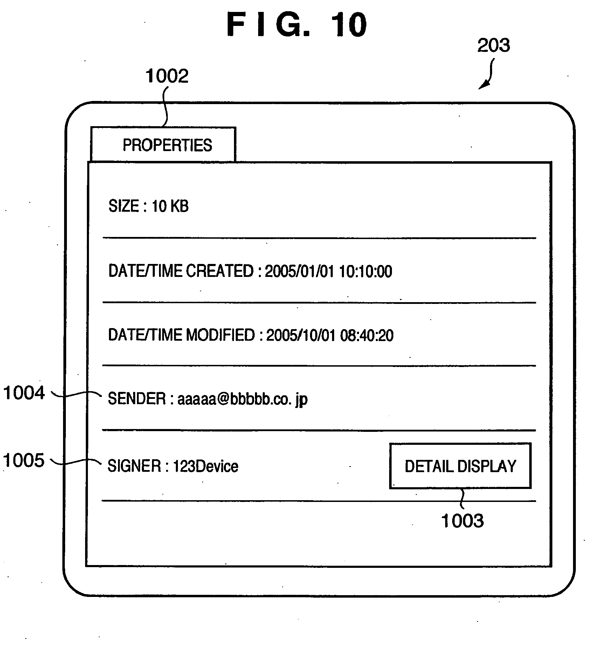

FIG. 10 depicts a view illustrating a display example of property information in the client PC 103 according to the second embodiment.

Here, as property information, information such as the file size, date and time the file was created, date and time of modification, sender, and signer is displayed in the display unit 203. Here, when displaying a property 1002, an original sender's mail address 1004 embedded in the PDF file in Step S15 is displayed. Further, in 1005, signer information is displayed that indicates who executed this electronic signature. Also, by instructing a "detail display" 1003, information related to the public key certificate 802 is displayed in a separate window.

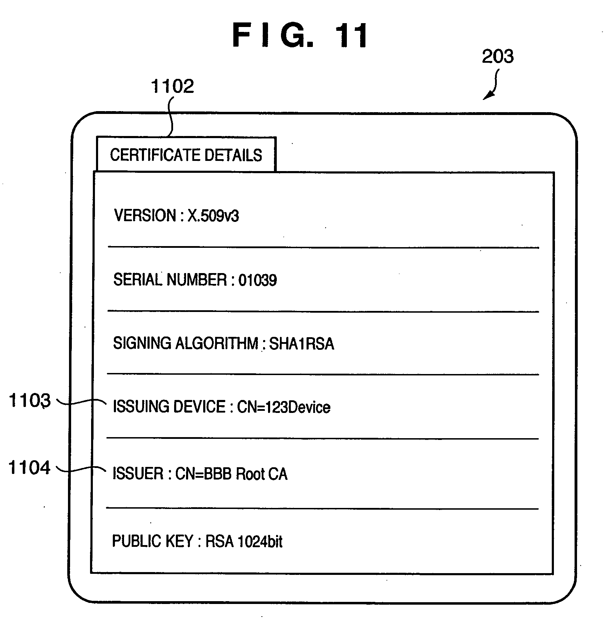

FIG. 11 depicts a view of an example of a detail display.

Reference numeral 1102 denotes display data indicating that this display is detailed information for the certificate. Displayed among this detailed information are a version, a serial number of the issuing device, and a signing algorithm. Also numeral 1103 denotes the device name of the device that issued this certificate. Also, information of the issuer that issued this certificate is displayed in 1104. Further, public key information is also displayed.

Thus, the user of the client PC 104 can check the property information of the PDF file, which is transferred data that was transferred by the color multi-functional peripheral 106, and the user can confirm who originally sent that data. Further, because the signature information and the certificate of the sending device are added to the transferred data, the user can also confirm which device transferred the data. Also, with the electronic signature function, the user can detect whether or not that mail data has been altered.

In the second embodiment, the sender's mail address (From Address) of the received mail is used as the sender information, but an individual person, or a telephone number or the like with which a device can be identified, may also be used.

Also, the file format of the transferred data is not limited to PDF; any file format may be used if the file format is one in which sender or author information, a public key certificate, and signature information can be embedded.

Also, in the second embodiment, the public key certificate and signature information of a device are always added to the transferred data, but whether or not to add the public key certificate and signature information may also be selectable with a user setting.

Further, as the condition for adding the public key certificate and signature information of a device, a setting may be adopted such that the public key certificate and signature information is added in a case that the received data was sent after being encrypted, or in a case that the communication path between the client PC and the multi-functional peripheral is encrypted. By adopting such a setting, it is possible to add an electronic signature only to high-security data, so that data can be transferred while insuring security.

### <Other embodiments>

Above, embodiments of the present invention were described in detail, but the present invention may be applied to a system configured from a plurality of devices, and the present invention may be applied to an apparatus configured from a single device.

Also, the present invention may also be attained by supplying a software program that realizes the functions of the embodiments described above, either directly or remotely in a system or apparatus, and a computer of that system or apparatus reading and executing that supplied program. In that case, the form of a program is not necessary if the function of a program is provided.

Accordingly, in order to realize the functional processes of the present invention with a computer, program code itself installed in the computer also realizes the present invention. That is, the claims of the present invention also include a computer program itself for realizing the functional processes of the present invention. In this case, if it has the function of a program, the program may be in any form, such as a program executed by object code or an interpreter, or script data supplied to an operating system.

Various items may be used as a recording medium for supplying the program. For example, it is possible to use a floppy (registered trademark) disk, hard disk, optical disk, magnetic optical disk, MO, CD-ROM, CD-R, CD-RW, magnetic tape, nonvolatile memory card, ROM, DVD (DVD-ROM, DVD-R), or the like.

As another method of supplying the program, it is possible to supply the program by using a browser of a client computer to connect to an Internet home page, and download from the home page to a recording medium such as a hard disk. In that case, the item downloaded may be the computer program itself of the present invention, or may be a compressed file that includes an automatic installation function. Also, supply of the program is realizable by dividing the program code that constitutes the program of the present invention among a plurality of files, and downloading each file from a different home page. That is, the claims of the present invention also encompass a WWW server allowing a plurality of users to download a program file for realizing the functional processes of the present invention with a computer.

An embodiment may also be adopted in which the program of the present invention is encrypted, stored on a storage medium such as a CD-ROM, and distributed to a user. In this case, a user who has cleared a predetermined condition is allowed to download key information to decrypt the encryption from a home page via the Internet, and by using that key information, the encrypted program is installed in a computer in an executable format.

The present invention can also be realized with an embodiment other than one in which the functions of the embodiments described above are realized by a computer executing a program that has been read. For example, based on the instructions of that program, an operating system or the like operating on a computer performs part or all of the actual processes, and the functions of the embodiments described above can be realized also by those processes.

Further, the program read from the recording medium may be written to a memory provided in a function expansion port inserted in the computer or a function expansion unit connected to the computer. In this case, after the program is written to the memory, based on the instructions of that program, a CPU or the like provided in that function expansion port or function expansion unit performs part or all of the actual processes, and the functions of the embodiments described above are realized by those processes.

While the present invention has been described with reference to exemplary embodiments, it is to be understood that the invention is not limited to the disclosed exemplary embodiments. The scope of the following claims is to be accorded the broadest interpretation so as to encompass all such modifications and equivalent structures and functions.

## Claims

1. A communication apparatus for receiving a document that has been sent, the communication apparatus comprising:
acquisition means (S3, S13) for acquiring sender information indicating the sender of the document;
conversion means (S4, S14) for converting the document from one file type into another file type;
addition means (S5, S15) for adding the sender information acquired by said acquisition means to the document of the specific format, converted by said conversion means; and
transfer means (S6, S18) for transferring the document of the specific format to which the sender information is added by said addition means, to a transfer destination.

2. A communication apparatus according to claim 1, wherein the sender information includes an email address of the sender of the received document.

3. A communication apparatus according to claim 1, wherein the sender information includes a telephone number of a terminal device that the sender used to send the received document.

4. A communication apparatus according to any one of claims 1 to 3, further comprising:
setting means (404) for setting transfer condition data indicating a condition for transferring a document, transfer destination data indicating the transfer destination of the document, and transfer file type data indicating the file type of the document to be transferred; and
determination means (S2) for determining whether or not the received document satisfies the transfer condition indicated by the transfer condition data,
wherein said conversion means converts into data of the file type indicated by the transfer file type data, and
said transfer means, in a case that the received document satisfies the transfer condition indicated by the transfer condition data, transfers the document of the specific format to which the sender information is added by said addition means, to the transfer destination indicated by the transfer destination data.

5. A communication apparatus for receiving a document according to any one of claims 1 to 4, further comprising
electronic signature means (S17) for generating an electronic signature corresponding to the document of the specific format to which the sender information is added, using a secret key and a public key certificate that corresponds to the secret key.

6. A communication apparatus according to claim 5, wherein said electronic signature means generates an electronic signature in a case that the received document is encrypted.

7. A communication apparatus according to any one of claims 1-6, wherein said addition means is arranged to add the sender information to the document of the specific format by adding the sender information to property information of the document of the specific format.

8. A method for controlling communication in a communication apparatus for receiving a document that has been sent, the method comprising:
an acquisition step (S3, S13) of acquiring sender information indicating the sender of the document;
a conversion step (S4, S14) of converting the document from one file type into another file type;
an addition step (S5 ,S15) of adding the sender information acquired in said acquisition step to the document of a specific format converted in said conversion step; and
a transfer step (S18) of transferring the document of the specific format to which the sender information is added in said addition step, to a transfer destination.

9. A method for controlling communication according to claim 8, wherein the sender information includes an email address of the sender of the received document.

10. A method for controlling communication according to claim 8, wherein the sender information includes a telephone number of a terminal device that the sender used to send the received document.

11. A method for controlling communication in a communication apparatus according to any one of claims 8 to 10, further comprising:
a setting step of setting transfer condition data indicating a condition for transferring a document, transfer destination data indicating the transfer destination of the document, and transfer file type data indicating the file type of the document to be transferred; and
a determination step of determining whether or not the received document satisfies the transfer condition indicated by the transfer condition data,
wherein in said conversion step, conversion into data of the file type indicated by the transfer file type data is performed, and
in said transfer step, in a case that the received document satisfies the transfer condition indicated by the transfer condition data, transfers the document of the specific format to which the sender information is added, to the transfer destination indicated by the transfer destination data.

12. A method for controlling communication according to any one of claims 8 to 11, further comprising
an electronic signature step (S17) of generating an electronic signature corresponding to the document of the specific format to which the sender information is added in said addition step, using a secret key and a public key certificate that corresponds to the secret key.

13. A method for controlling communication according to claim 12, wherein said electronic signature step generates an electronic signature in a case that the received document is encrypted.

14. A program that, when run on a computer, allows the computer to perform a method according to any one of claims 8 to 13.
